# EUROPÄISCHE PATENTSCHRIFT

(11) **EP 2 806 992 B1**
(45) Veröffentlichungstag und Bekanntmachung des Hinweises auf die Patenterteilung: **21.03.2018**
(21) Anmeldenummer: 13740866.2
(22) Anmeldetag: 25.01.2013
(51) Int. Cl.: B23H 3/04, B23H 9/10, B23H 7/26

(54) **MEHRTEILIGE ELEKTRODENANORDNUNG UND VERFAHREN ZUR ELEKTROCHEMISCHEN BEARBEITUNG VON SCHAUFELN MIT DECKBÄNDERN**
MULTIPART ELECTRODE ARRAY AND METHOD FOR THE ELECTROCHEMICAL TREATMENT OF BLADES HAVING SHROUDING BANDS
SYSTÈME D'ÉLECTRODES EN PLUSIEURS PARTIES ET PROCÉDÉ D'USINAGE ÉLECTROCHIMIQUE D'AUBES POURVUES DE BANDES DE RECOUVREMENT

(30) Priorität: 25.01.2012 DE 102012201052
(43) Veröffentlichungstag der Anmeldung: 03.12.2014
(73) Patentinhaber: MTU Aero Engines AG, 80995 München (DE)
(72) Erfinder: PLATZ, Albin, 86510 Ried-Baindlkirch (DE); ARBINGER, Daniela, 94551 Hund Rohrstetten (DE)
(86) Internationale Anmeldenummer: PCT/EP2013/000218
(87) Internationale Veröffentlichungsnummer: WO 2013/110462

(56) Entgegenhaltungen:
- DE-A1-102010 014 242
- GB-A- 952 719
- GB-A- 1 309 491
- JP-A- H05 318 230
- US-A- 5 244 548
- US-A- 5 882 491

## Beschreibung

### HINTERGRUND DER ERFINDUNG

### GEBIET DER ERFINDUNG

Die vorliegende Erfindung betrifft ein Verfahren zur elektrochemischen Bearbeitung von Schaufeln einer Strömungsmaschine, insbesondere eines Flugtriebwerks, sowie eine Elektrodenanordnung zur Durchführung einer elektrochemischen Bearbeitung.

### STAND DER TECHNIK

Das elektrochemische Abtragen (electro-chemical machining ECM) ist zum Bearbeiten von elektrisch leitfähigen Bauteilen bekannt und wird im Bereich der Herstellung von Flugtriebwerken zur Bearbeitung der Triebwerkschaufeln eingesetzt.

Beispielsweise wird in der US 4,999,093 A eine Elektrodenanordnung für die elektrochemische Bearbeitung von Schaufeln beschrieben, bei der zwei Elektrodenteile zueinander bewegbar sind, um mit den Elektrodenteilen die Kontur der zu bearbeitenden Oberfläche abzubilden. Allerdings werden durch die Elektrodenteile Lücken in der Arbeitsfläche der Elektroden gegenüber der zu bearbeitenden Oberfläche erzeugt, bzw. ergeben sich durch die Elektrodenteile gegenseitige Beeinflussungen, die zu Unebenheiten in der zu bearbeitenden Oberfläche führen, sodass insgesamt die vorgeschlagene Lösung nicht zu gleichmäßig bearbeiteten Oberflächen führt und deshalb für die Bearbeitung von Triebwerksschaufeln ungeeignet ist.

Aus der WO 2006 137 525 A1 ist ebenfalls eine Elektrodenanordnung bekannt, bei der jeweils für eine zu bearbeitende Oberfläche zwei Elektroden vorgesehen sind, die zueinander beweglich sind, sodass auch schwierige Konturen mit der Elektrodenanordnung bearbeitbar sind. Allerdings sind die zueinander beweglichen Elektrodenteile so angeordnet, dass sie in einer bestimmten Reihenfolge verfahren werden müssen, sodass für einen erheblichen Bearbeitungszeitraum unterschiedlich Verhältnisse für die elektrochemische Bearbeitung vorliegen, was wiederum zu einem ungleichmäßigen Angriff an der zu bearbeitenden Oberfläche und Unregelmäßigkeiten in der bearbeiteten Oberfläche führt.

Die britische Patentanmeldung GB 952 719 A kann als nächstliegender Stand der Technik angesehen werden und beschreibt ein Verfahren zum Herstellen eines Werkzeugs zur Verwendung in einem Verfahren zur elektrochemischen Bearbeitung von Schaufeln einer Strömungsmaschine mit mindestens einem u- oder trapezförmigen Querschnittsprofil der zu bearbeitenden Oberfläche mit einer Elektrodenanordnung mit mindestens drei Elektroden, die in verschiedenen Richtungen verfahrbar sind. Die Elektroden sind aus einer Ausgangsposition mit einem ersten Abstand zur zu bearbeitenden Oberfläche in eine Endposition mit einem zweiten Abstand zur zu bearbeitenden Oberfläche verfahrbar, so dass in der Endposition eine geschlossene Arbeitsfläche der Elektroden mit einer Negativform der Oberflächenkontur der zu bearbeitenden Oberfläche dieser gegenüberliegt.

### OFFENBARUNG DER ERFINDUNG

### AUFGABE DER ERFINDUNG

Es ist deshalb Aufgabe der vorliegenden Erfindung eine Elektrodenanordnung und eine entsprechendes Verfahren zum Betrieb einer derartigen Elektrodenanordnung zur elektrochemischen Bearbeitung von Triebwerksschaufeln anzugeben, bei welchem die Nachteile des Stands der Technik vermieden werden und insbesondere eine gleichmäßige Oberflächenbearbeitung zur Erzielung einer hohen Oberflächengüte möglich ist, wobei die zu bearbeitende Oberfläche komplexe Konturen und insbesondere Hinterschneidungen aufweisen können soll. Eine entsprechende Elektrodenanordnung soll darüber hinaus einfach herstellbar und betreibbar sein.

### TECHNISCHE LÖSUNG

Diese Aufgabe wird gelöst durch ein Verfahren mit den Merkmalen des Anspruchs 1 sowie eine Elektrodenanordnung mit den Merkmalen des Anspruchs 11. Vorteilhafte Ausgestaltungen sind Gegenstand der abhängigen Ansprüche.

Das vorgeschlagene Verfahren dient zur elektrochemischen Bearbeitung von Schaufeln einer Strömungsmaschine, wobei die Schaufel einen Gaskanalbereich aufweist und Deckbänder am Schaufelfuß und/oder an der Schaufelspitze umfasst, die einseitig oder beidseitig so geneigt sind, dass Hinterschneidungen im Gaskanalbereich vorliegen, wobei mehrere sternförmig angeordnete Elektroden verwendet werden, um von einer Ausgangsposition mit einem ersten Abstand von einer zu bearbeitenden Oberfläche in eine Endposition mit einem zweiten Abstand von einer Endkontur der zu bearbeitenden Oberfläche verfahren zu werden, so dass in der Endposition eine geschlossene Arbeitsfläche der Elektroden mit einer Negativform der Endkontur der zu bearbeitenden Oberfläche gegenüberliegt.

Erfingdungsgemäß ist jede Elektrode mehrteilig und umfasst mindestens drei Elektrodenteile. Die Elektrodenteile sind dabei senkrecht zur Ebene, in der die mehrteiligen Elektroden sternförmig angeordnet sind, aufgereiht.

Bei der vorliegenden Erfindung wird sowohl von mehrteiligen Elektroden als auch von mehreren Elektroden gesprochen, wobei hier lediglich zum Ausdruck gebracht wird, dass mehrere Elektroden als eine Einheit (mehrteilige Elektrode) oder als separate Komponenten angesehen werden können, ohne dass sich ein technischer Unterschied zwischen Elektroden oder Elektrodenteilen ergeben muss, soweit die Elektroden oder Elektrodenteile ihre Funktion als Elektrode an sich verfüllen. Lediglich die konstruktive Anordnung der Elektrodenteile kann sich insofern von Elekt roden unterscheiden, als Elektrodenteile mehr in Kombination miteinander angeordnet sein können, während Elektroden eher unabhängig voneinander vorgesehen sein können.

Die Bewegung der Elektroden kann dabei so geführt werden, dass sowohl in der Anfangsposition der Elektroden, als auch in der Endposition eine geschlossene Arbeitsfläche der Elektroden oder Elektrodenteile vorliegt, die im Wesentlichen komplementär zur Oberflächentopographie der zu bearbeitenden Oberfläche ist.

Die Bewegung der mehrteiligen Elektroden kann eine Hauptbewegungsrichtung aufweisen, die sich dadurch auszeichnen kann, dass alle Elektrodenteile einen einen Bewegungsanteil in dieser Richtung aufweisen, beispielsweise in Richtung des Schaufelblattes einer zu bearbeitenden Triebwerksschaufel. Insbesondere kann durch die Bewegung von mindestens drei Elektroden einer Elektrodenanordnung oder einer mehrteiligen Elektrode eine nahezu kontinuierliche und geschlossene Arbeitsfläche der Elektroden mit im Wesentlichen gleichen Abstand der Arbeitsfläche zu der zu bearbeitenden Oberfläche über die Bearbeitungszeit realisiert werden, sodass über die Bearbeitungszeit ein gleichmäßiger Abtrag über die gesamte zu bearbeitende Oberfläche eingestellt werden kann.

Durch die Gestaltung der Elektrodenanordnung mit mindestens drei verfahrbaren Elektroden bzw. einer mehrteiligen Elektrode mit mindestens drei verfahrbaren Elektrodenteilen zur Bearbeitung einer zu bearbeitenden Oberfläche kann auch gewährleistet werden, dass alle Elektroden im Wesentlichen gleichzeitig ihre Endposition erreichen, so dass unterschiedlich lange Bearbeitungszeiten ebenfalls vermieden werden und der Abstand der Elektroden oder Elektrodenteile zur Endkontur einer zu bearbeitenden Oberfläche im Wesentlichen gleich ist.

Damit können sowohl über die gesamte Bearbeitungszeit als auch über die gesamte zu bearbeitende Oberfläche gleichmäßige Abtragsbedingungen mit einem im Wesentlich gleichen Abstand der Arbeitsfläche der Elektroden zu der zu bearbeitenden Oberfläche realisiert werden.

Hierbei kann das Längsschnittsprofil der zu bearbeitenden Oberfläche U- oder trapezförmig sein, wobei insbesondere die zu bearbeitende Oberfläche einen Teil eines Trapezes bilden kann und zwar den Teil mit der längeren Grundseite (Basis) und hierzu schräg verlaufenden Schenkeln, sodass eine Hinterschneidung gegeben ist. Eine derartige Längsschnittsform kann beispielsweise durch einen Längsschnitt einer Triebwerksschaufel mit einem Deckband, der Kontur des Schaufelblatts und einen Teil des Schaufelfußes, z.B. im Bereich einer Dichtfin, gegeben sein. Eine derartige komplizierte Oberflächenkontur kann mit dem erfindungsgemäßen Verfahren bzw. einer entsprechenden Elektrodenanordnung in einfacher Weise in einem Bearbeitungsschritt bearbeitet werden.

Die Elektrodenanordnung kann so ausgebildet sein, dass von den mindestens drei Elektroden oder Elektrodenteilen einer mehrteiligen Elektrode sich mindestens eine mittlere Elektrode oder ein mittleres Elektrodenteil entlang einer linearen Bewegungslinie, beispielsweise in Richtung des Schaufelblattes bewegt, während sich die äußeren Elektroden oder Elektrodenteile, zwischen denen die mindestens eine mittlere Elektrode oder das mindestens eine Elektrodenteil angeordnet ist, von der Bewegungsrichtung der mindestens einen mittleren Elektrode oder dem mindestens einen Elektrodenteil schräg nach außen weg bewegen, und zwar in einem spitzen Winkel zwischen 30° und 60° zwischen den Bewegungslinien einerseits der mindestens einen mittleren Elektrode oder des mindestens einen Elektrodenteils und andererseits einer äußeren Elektrode.

Bei der Elektrodenanordnung können die äußeren Elektroden der mindestens drei Elektroden oder die äußeren Elektrodenteile einer mehrteiligen Elektrode in Bewegungsrichtung gesehen bezüglich ihrer Arbeitsflächen vor der mindestens einen mittleren Elektrode oder dem mindestens einen Elektrodenteil angeordnet sein, also zuerst gegenüber der zu bearbeitenden Oberfläche angeordnet sein, und insbesondere in der Anfangsposition die Arbeitsfläche der mindestens einen mittleren Elektrode oder des mindestens einen Elektrodenteils abdecken. Die mindestens eine mittlere Elektrode oder das mindestens eine Elektrodenteil kann entsprechend bei der Bewegung den äußeren Elektroden geringfügig nachlaufen.

Die Elektroden oder Elektrodenteile können zueinander isoliert ausgeführt sein und entsprechend mit unterschiedlichen elektrischen Potentialen beaufschlagt werden. Insbesondere kann die mindestens eine mittlere Elektrode oder das mindestens eine mittlere Elektrodenteil gegenüber den äußeren Elektroden oder Elektrodenteilen isoliert sein und mit einer unterschiedlichen Spannung betrieben werden, um eventuell vorhandende geringfügige Unterschiede in der Spaltbreite zwischen den Arbeitsflächen der Elektroden und der zu bearbeitenden Oberfläche durch eine entsprechende Änderung der Potentialunterschiede bzw. der Spannungsverhältnisse auszugleichen.

Die Elektroden oder Elektrodenteile können sich auf linearen Bewegungspfaden bewegen. Darüber hinaus kann eine gleichmäßige Bewegung mit gleichbleibender Geschwindigkeit eingestellt werden.

Die Elektroden oder Elektrodenteile können auch miteinander gekoppelt sein, sodass ihre Bewegung aufeinander abgestimmt ist und ihre gegenseitige Bewegung durch die Kopplung zwangsweise gesteuert wird. Zusätzlich oder alternativ ist auch eine Steuerung durch eine geeignete Steuer- oder Regelungseinheit möglich.

Mehrere Elektroden, beispielsweise 4, 6 oder mehr Elektroden sind sternförmig um einen Bearbeitungsplatz, insbesondere eine Triebwerksschaufel angeordnet sein, um verschiedene Seiten der zu bearbeitenden Triebwerksschaufel bearbeiten zu können. Hierbei werden Elektroden mit drei Elektrodenteilen eingesetzt, wobei die Elektrodenteile in einer Ebene quer zur Ebene, in der die mehrteiligen Elektroden angeordnet sind, aufgereiht sein können. Damit lassen sich mehrere Seiten einer Triebwerksschaufel sowie die verschiedenen Bereiche der Triebwerksschaufel, die im Gaskanal dem Gasstrom ausgesetzt sind, also z.B. Schaufelblattbereich und Deckbandbereiche der verschiedenen Seiten der Triebwerksschaufel bearbeiten, auch wenn dort Hinterschneidungen vorhanden sind.

### KURZBESCHREIBUNG DER FIGUREN

Die beigefügten Zeichnungen zeigen in rein schematischer Weise in
- Fig. 1: eine Längsschnittansicht für eine nicht erfindungsgemäße Elektrodenanordnung vor dem Beginn einer elektrochemischen Bearbeitung einer Triebwerksschaufel,
- Fig. 2: eine Längsschnittansicht der Elektrodenanordnung aus Fig. 1 am Ende der elektrochemischen Bearbeitung einer Triebwerksschaufel, und in
- Fig. 3: eine erfindungsgemäßen Querschnittansicht einer Elektrodenanordnung mit mehreren sternförmig angeordneten mehrteiligen Elektroden, wobei jede mehrteilige Elektrode durch eine Elektrodenanordnung gemäß Fig. 1 und 2 gebildet ist.

### AUSFÜHRUNGSBEISPIEL

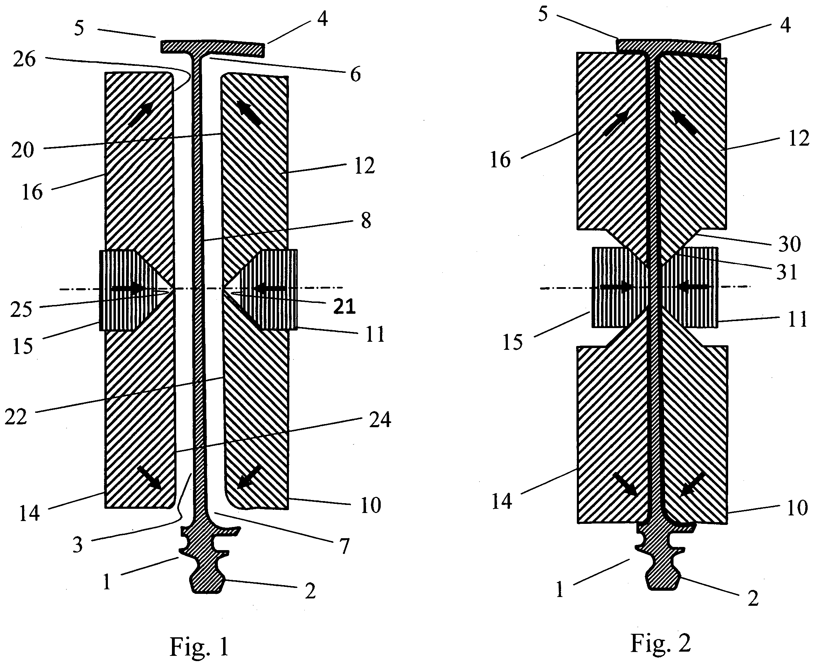

Weitere Vorteile, Kennzeichen und Merkmale der vorliegenden Erfindung werden bei der nachfolgenden detaillierten Beschreibung eines Ausführungsbeispiels anhand der beigefügten Zeichnungen deutlich. Allerdings ist die Erfindung nicht auf dieses Ausführungsbeispiel beschränkt. Die Figur 1 zeigt eine nicht erfindungsgemäße Elektrodenanordnung, die insgesamt sechs Elektroden 10, 11, 12, 14, 15, 16 umfasst, die beidseitig einer zu bearbeitenden Turbinenschaufel 1 angeordnet sind. Alternativ könnten auch zwei Elektrodenanordnungen mit jeweils drei Elektroden vorgesehen werden. Somit ist es möglich, beide Seiten des Schaufelblatts 3 gleichzeitig zu bearbeiten.

Die Elektroden sind in geeigneter Weise mit einer Spannungsquelle verbunden, die hier der Einfachheit halber nicht dargestellt ist. Üblicherweise sind die Elektroden 10, 11, 12, 14, 15, 16 als Kathode gepolt, während die Turbinenschaufel 1 als Anode geschaltet ist.

Die Elektroden 10, 11, 12, 14, 15, 16 können gegenseitig isoliert sein, um ein unterschiedliches elektrisches Potential anlegen zu können. Im gezeigten Ausführungsbeispiel der Figur 1 ist beispielsweise die Elektrode 11 gegenüber den benachbarten, außen liegenden Elektroden 10 und 12 isoliert und wird separat von einer Spannungsquelle mit Spannung beaufschlagt. In gleicher Weise ist bei der gegenüberliegenden Elektrodenanordnung die Elektrode 15 gegenüber den Elektroden 14 und 16 isoliert und mit einer unterschiedlichen Spannung beaufschlagt.

Die zu bearbeitende Turbinenschaufel 1 weist einen Schaufelfuß 2 auf, mit dem die Turbinenschaufel 1 in einer Turbinenscheibe angeordnet wird. Am gegenüberliegenden Ende sind am Schaufelblatt 3 zwei Deckbänder 4 und 5 angeordnet, die mit sogenannten Dichtfins im Bereich des Schaufelfußes 2 den Strömungsbereich für das Fluid der Strömungsmaschine definieren. Dadurch ergibt sich eine zu bearbeitenden Oberfläche der Turbinenschaufel 1, die sich beidseitig des Schaufelblatts 3 von den Deckbändern 4 und 5 über das Schaufelblatt 3 bis in den Fußbereich 2 erstreckt und im Schnitt eine U- bzw. trapezförmige Kontur aufweist. Bei dem gezeigten Ausführungsbeispiel der Figur 1 liegt diese zu bearbeitende Oberfläche 8 auf den beiden Seiten des Schaufelblatts 3 vor, sodass jeweils drei Elektroden der Elektrodenanordnung eine entsprechende, im Schnitt U- bzw. trapezförmige Oberfläche 8 zugeordnet ist, die mittels der Elektroden 10, 11,12, 14, 15, 16 zu bearbeiten ist.

Durch die im Längsschnitt der Schaufel trapezförmige Gestalt, bei der die kürzere Grundseite offen ist und die längere Grundseite (Basis) durch das Schaufelblatt 3 gebildet wird, ergibt sich durch das schräg zum Schaufelblatt zur offenen Grundseite des Trapezes verlaufende Deckband 4 in Richtung einer Normalen auf das Schaufelblatt 3 eine Hinterschneidung 6, die dazu führt, dass bei einer linearen Bewegung einer Elektrode in Richtung der Normalen des Schaufelblatts 3 der Abstand der Elektrode zum Deckband 4 im Bereich des Übergangs zum Schaufelblatt größer ist, als am Rand des Deckbands 4. Bei einer elektrochemischen Bearbeitung kommt es jedoch neben der eingestellten Spannung im Wesentlichen auf den Abstand zwischen den Elektroden, d.h. Arbeitsfläche der Elektrode, und dem zu bearbeitenden Bauteil an, sodass im Bereich der Hinterschneidung 6 der Abtrag am Rande des Deckbands 4 größer wäre als im Bereich der Hinterschneidung.

Diesem Problem wird nunmehr mit der dreiteiligen Elektrodenanordnung beidseits des Schaufelblatts 3 abgeholfen, indem die Elektroden 10 und 12 bzw. 14 und 16 sich unter einem Winkel gegenüber der Bewegungsrichtung der Elektroden 11 bzw. 15 auf die zu bearbeitende Oberfläche 8 der Turbinenschaufel bei der Bearbeitung zu bewegen. Die Figur 1 zeigt die Ausgangsposition, bei welcher ein Spalt 7 mit einem ersten Abstand der zu bearbeitenden Oberfläche 8 der Triebwerksschaufel 1 zu den Arbeitsflächen 20, 22, 24 und 26 der Elektroden 10, 12, 14, 16 eingestellt ist. Die Arbeitsflächen 20,22,24 und 26 der Elektroden 10, 12, 14, 16 bilden hierbei eine komplementäre Oberfläche zur zu bearbeitenden Oberfläche 8, sodass die Breite des Spalts 7 im Wesentlichen über der gesamten zu bearbeitenden Oberfläche 8 gleich ist. Die Arbeitsfläche 20 der Elektrode 12 ist hierbei insbesondere entsprechend komplementär zu der Hinterschneidung 6 über das Deckband 4 ausgebildet.

Die Arbeitsflächen 21 und 25 der Elektroden 11 und 15 sind in der in Figur 1 dargestellten Anfangsposition von den Arbeitsflächen 20,22 der Elektroden 12, 10 bzw. den Arbeitsflächen 26, 24 der Elektroden 16, 14 verdeckt und stellen noch keinen Teil der Gesamtarbeitsfläche der Elektroden dar.

Allerdings ändert sich diese Situation, wenn die elektrochemische Bearbeitung der Turbinenschaufel 1 begonnen hat, und sich die Elektroden 10, 11, 12, 14, 15, 16 mit kontinuierlicher Geschwindigkeit in Richtung der Triebwerkschaufel 1 bewegen. Hierbei bewegen sich die Elektroden 11, 15 in genau entgegengesetzter Richtung aufeinander zu, und zwar quer zum Schaufelblatt, vorzugsweise entlang der Normalen der Schaufelblattoberfläche.

Dem gegenüber bewegen sich die jeweiligen äußeren Elektroden 10, 12 bzw. 14, 16 unter einem Winkel schräg zur Bewegungsrichtung der mittleren Elektroden 11, 15 und zwar im einem Winkelbereich von 30° bis 60°, wobei in dem gezeigten Ausführungsbeispiel der Winkel ungefähr jeweils 45° beträgt, wenn unabhängig von der Bewegungsrichtung der spitze Winkel zwischen den Bewegungslinien der Elektroden 11, 15 bzw. 12, 10 und 14, 16 genommen wird. Unter Berücksichtigung der Bewegungsrichtung und der Annahme, dass die Bewegungsrichtung der Elektrode 15 0° ist und die Richtungsangabe entsprechend im Uhrzeigersinn gemacht wird, bewegt sich die Elektrode 14 ca. unter 45°, die Elektrode 10 bei 135°, die Elektrode 11 bei 180°, die Elektrode 12 bei 225° und die Elektrode 16 bei 315°.

Durch diese Art der Bewegung der Elektroden 10, 11, 12, 14, 15, 16 wird erreicht, dass der Spalt 7 zwischen den Arbeitsflächen 20, 21, 22, 24, 25, 26 der Elektroden 10, 11, 12, 14, 15, 16 und der zu bearbeitenden Oberfläche 8 der Turbinenschaufel 1 gleichmäßig verringert wird, bis die in Figur 2 dargestellte Endposition erreicht wird. Die Lücke, die zwischen den Elektroden 10, 12 bzw. 14, 16 durch die schräg nach außen verlaufende Bewegung entsteht, wird in gleicher Weise durch die jeweils mittleren Elektroden 11, 15 ausgefüllt, sodass sich auch in der Endposition eine geschlossene Arbeitsfläche der Elektroden ergibt, die komplementär zu der zu bearbeitenden Oberfläche 8 der Schaufel 1 ist, wobei insbesondere im Wesentlichen der gleiche Abstand zwischen zu bearbeitender Oberfläche und der Arbeitsfläche der Elektroden vorliegt.

Da die Elektroden 11, 15 der Bewegung der Elektroden 10, 12 ,14, 16 etwas nachlaufen, kann durch die isolierte Ausführung der Elektroden 11, 15 gegenüber den Elektroden 10, 12, 14, 16 und der separaten Spannungsversorgung ein unterschiedliches Potential an den Elektroden 11, 15 eingestellt werden, sodass mögliche Unterschiede in der Ausbildung des Spalts 7 zwischen der zu bearbeitenden Oberfläche 8 und den Arbeitsflächen 20, 21, 22, 24, 25, 26 durch die Potentialeinstellung ausgeglichen werden.

Durch die Ausbildung von Schrägflächen 30, 31 an den benachbarten Elektroden, wie beispielsweise Elektroden 11 und 12, also der mittleren Elektrode 11 und einer äußeren Elektrode 12, kann eine Kopplung der Bewegungen der Elektrode 11 und der Elektrode 12 erreicht werden, die eine koordinierte Bewegung der mittleren Elektroden 11, 15 und der äußeren Elektroden 10, 12, 14, 16 ermöglicht. Neben der Ausbildung der hier gezeigten Schrägflächen 30, 31 können auch andere geeignete Kopplungsmaßnahmen zur Kopplung der Bewegungen der Elektroden und insbesondere der mittleren Elektroden 11, 15 mit den äußeren Elektroden 10, 12, 14, 16 eingesetzt werden.

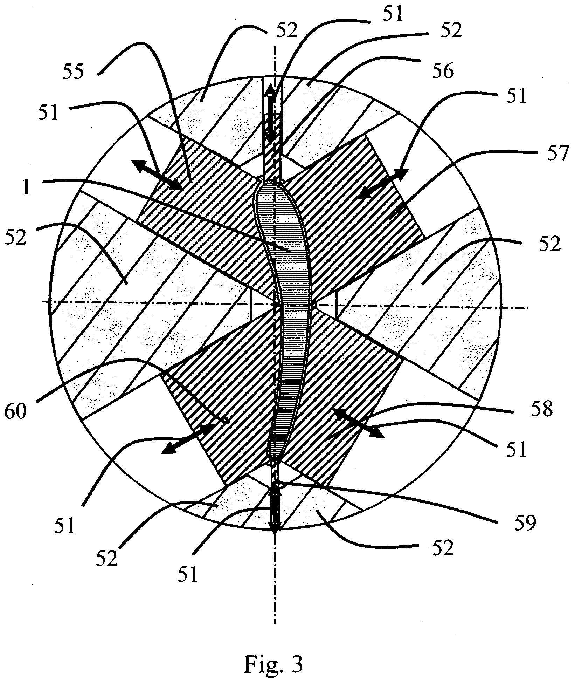

Die Fig. 3 zeigt einen Querschnitt durch eine Triebwerksschaufel 1 und eine sternförmig zur Bearbeitung der Triebwerksschaufel um diese angeordnete Elektrodenanordnung. Die Elektrodenanordnung umfasst sechs Elektroden 55 bis 60, von denen jede mehrteilig ausgebildet ist und zwar entsprechend der Ausführungsform, die in Figuren 1 und 2 gezeigt ist, so dass die dort dargestellten Elektroden Elektrodenteile der mehrteiligen Elektroden 55 bis 60 bilden.

Die mehrteiligen Elektroden 55 bis 60 sind durch Dichtelemente 52 der Spülkammer voneinander getrennt. Die Doppelpfeile 51 zeigen die Hauptbewegungsrichtungen der Elektroden 55 bis 60, wobei sich die jeweiligen äußeren Elektrodenteile 10, 12, 14, 16 schräg zur Zeichnungsebene bewegen, während die mittleren Elektrodenteile 11 und 15 parallel zur Zeichnungsebene verschoben werden.

Durch die erfindungsgemäße Ausbildung der Elektrodenanordnung sowie dem entsprechenden Betrieb derartiger Elektrodenanordnungen in Bezug auf die Bearbeitung von Triebwerksschaufeln insbesondere mit zwei Deckbändern, die Hinterschneidungen aufweisen, kann in einer einfachen Weise eine exakte Bearbeitung der Turbinenschaufel mit elektrochemischer Bearbeitung erfolgen, wobei sich eine hohe Qualität der bearbeiteten Oberfläche ergibt. Insbesondere im Bereich der Deckbänder 4, 5 bzw. der restlichen Arbeitsfläche der Elektroden 12, 16 ist eine hervorragende Bearbeitung möglich, die eine Nacharbeit überflüssig macht. Darüber hinaus kann der Startpunkt der Elektroden näher an der zu bearbeitenden Oberfläche gewählt werden, sodass die Strecke, die die Elektroden während der Bearbeitung verfahren werden müssen, verringert werden kann, was einen Vorteil hinsichtlich der Bearbeitungszeit ergibt.

Darüber hinaus lässt sich die Elektrodenanordnung einfach realisieren und mit anderen Maßnahmen zur Optimierung der Bearbeitungsergebnisse kombinieren, wie beispielsweise die Bearbeitung mit sternförmig angeordneten Elektroden zur Vermeidung eines Seitenspaltes, oder die Bearbeitung mit definiert reduzierten aktiven Senkflächen zur Verbesserung der Spaltverhältnisse über gekrümmte Schaufelblattbereiche.

Obwohl die vorliegende Erfindung anhand des Ausführungsbeispiels detailliert beschreiben worden ist, ist es für einen Fachmann selbstverständlich, dass die Erfindung nicht auf dieses Ausführungsbeispiel beschränkt ist, sondern dass im Rahmen der Ansprüche Abwandlungen in der Weise möglich sind, dass einzelne Merkmale weggelassen oder andersartige Kombinationen von Merkmalen vorgenommen werden.

## Patentansprüche

1. Verfahren zur elektrochemischen Bearbeitung von Schaufeln (1) einer Strömungsmaschine, wobei die Schaufel einen Gaskanalbereich aufweist und Deckbänder am Schaufelfuß und/oder an der Schaufelspitze umfasst, die einseitig oder beidseitig so geneigt sind, dass Hinterschneidungen im Gaskanalbereich vorliegen, wobei
mehrere sternförmig angeordnete Elektroden (55- 60) verwendet werden, um von einer Ausgangsposition mit einem ersten Abstand von einer zu bearbeitenden Oberfläche in eine Endposition mit einem zweiten Abstand von einer Endkontur der zu bearbeitenden Oberfläche verfahren zu werden, so dass in der Endposition eine geschlossene Arbeitsfläche der Elektroden mit einer Negativform der Endkontur der zu bearbeitenden Oberfläche gegenüberliegt,
**dadurch gekennzeichnet, dass**
- jede Elektrode (55-60) mehrteilig ist und mindestens drei Elektrodenteile (10, 11, 12, 14, 15, 16) umfasst und
- die Elektrodenteile senkrecht zur Ebene, in der die mehrteiligen Elektroden (55-60) sternförmig angeordnet sind, aufgereiht sind.

2. Verfahren nach Anspruch 1,
**dadurch gekennzeichnet, dass**
alle Elektrodenteile (10, 11, 12, 14, 15, 6) gleichzeitig in der Endposition ankommen.

3. Verfahren nach Anspruch 1 oder 2,
**dadurch gekennzeichnet, dass**
jede außen liegende Elektrodenteile (10, 12; 14, 16) in einem Winkel von 30° bis 60° zu einer Hauptbewegungsrichtung der Elektrode in Richtung der Deckbänder bewegt werden, während eine oder mehrere mittlere Elektroden die frei werdende Lücke im Bereich des Schaufelblattes schießen.

4. Verfahren nach einem der vorhergehenden Ansprüche,
**dadurch gekennzeichnet, dass**
drei, vier oder sechs oder mehr mehrteilige Elektroden (55-60) verwendet werden, die in ihrer Hauptbewegungsrichtung sternförmig auf das Schaufelblatt zubewegt werden.

5. Verfahren nach einem der vorhergehenden Ansprüche,
**dadurch gekennzeichnet, dass**
die Elektrodenteile (10, 11, 12, 14, 15, 16) jeweils eine Arbeitsflächenkontur aufweisen, die einem Teil der zu bearbeitenden Oberfläche komplementär ist und/oder dass ein U- oder trapezförmigen Querschnittsprofil der zu bearbeitenden Oberfläche durch ein Deckband, das Schaufelblatt und einen Teil im Bereich des Schaufelfußes gebildet ist, und dass insbesondere zumindest ein Teil des Deckbandes (4) so zum Schaufelblatt (3) orientiert ist, dass eine Hinterschneidung in Bezug auf eine Richtung parallel zur Oberflächennormale auf das Schaufelblatt ausgebildet ist.

6. Verfahren nach einem der vorhergehenden Ansprüche,
**dadurch gekennzeichnet, dass**
die Bewegungsrichtungen der Elektroden so eingerichtet sind, dass sich mindestens ein mittleres Elektrodenteil (11, 15) der mindestens drei Elektrodenteile (10, 11, 12, 14, 15, 16), die sich zwischen zwei äußeren Elektrodenteilen (10, 12, 14, 16) befindet, linear auf das Schaufelblatt zu bewegt, während sich die beiden äußeren Elektrodenteile in einem Winkel von 30° bis 60° zur Bewegungsrichtung des mittleren Elektrodenteils vom mittleren Elektrodenteil weg bewegen.

7. Verfahren nach einem der vorhergehenden Ansprüche,
**dadurch gekennzeichnet, dass**
die nachlaufenden Elektrodenteile oder Elektroden gegenüber den vorauslaufenden Elektrodenteilen der mehrteiligen Elektrode oder Elektroden elektrisch isoliert sind und mit einer höheren Spannung versorgt werden.

8. Verfahren nach einem der vorhergehenden Ansprüche,
**dadurch gekennzeichnet, dass**
alle Elektrodenteile oder Elektroden in Endposition im Wesentlichen den gleichen Abstand von einer Endkontur der zu bearbeitenden Oberfläche aufweisen.

9. Verfahren nach einem der vorhergehenden Ansprüche,
**dadurch gekennzeichnet, dass**
die Elektroden oder Elektrodenteile, insbesondere eine mittlere Elektrode oder ein mittleres Elektrodenteil (11, 15) gegenüber außen liegenden Elektroden oder Elektrodenteilen (10, 12, 14, 16) isoliert sind und/oder mit unterschiedlicher Spannung beaufschlagt werden.

10. Verfahren nach Anspruch 9,
**dadurch gekennzeichnet, dass**
die mindestens eine mittlere Elektrode oder ein mittleres Elektrodenteil (11, 15) so mit Spannung beaufschlagt wird, dass der effektive elektrochemische Abstand dem Abstand der äußeren Elektroden oder Elektrodenteilen (10, 12, 14, 16) zur zu bearbeitenden Oberfläche entspricht.

11. Elektrodenanordnung zur Durchführung einer elektrochemischen Bearbeitung nach einem der vorhergehenden Ansprüche, wobei die Elektrodenanordnung mehrere sternförmig angeordnete Elektroden (55-60) umfasst, die in verschiedenen Richtungen zueinander und zu einer ortsfesten Lagerung verfahrbar sind, wobei die Elektroden und/oder Elektrodenteile aus einer Ausgangsposition in eine Endposition verfahrbar sind, so dass die Elektroden (55-60) mit ihren Arbeitsflächen in der Endposition eine kontinuierliche Oberfläche bilden,
**dadurch gekennzeichnet, dass**
- jede Elektrode (55-60) mehrteilig ist und mindestens drei Elektrodenteile umfasst und
- die Elektrodenteile senkrecht zur Ebene, in der die mehrteiligen Elektroden (55-60) sternförmig angeordnet sind, aufgereiht sind.

12. Elektrodenanordnung nach Anspruch 11,
**dadurch gekennzeichnet, dass**
die Elektroden linear und/oder mit gleichmäßiger Geschwindigkeit verfahrbar sind.

13. Elektrodenanordnung nach Anspruch 11 oder 12,
**dadurch gekennzeichnet, dass**
drei, vier oder sechs oder mehr mehrteilige Elektroden sternförmig angeordnet sind.

14. Elektrodenanordnung nach einem der Ansprüche 11 bis 13,
**dadurch gekennzeichnet, dass**
von der mehrteiligen Elektrode ein außen angeordnetes Elektrodenteil in der Bewegungsrichtung bezüglich ihrer Arbeitsflächen vor der mindestens einen mittleren Elektrode oder einem mittleren Elektrodenteil (11, 15) angeordnet ist und das mittlere Elektrodenteil nachläuft und/oder die Elektrodenteile zumindest teilweise gekoppelt sind.

15. Elektrodenanordnung nach einem der Ansprüche 11 bis 14,
**dadurch gekennzeichnet, dass**
die Elektroden oder Elektrodenteile mit ihren Arbeitsflächen (20, 21, 22, 24, 25, 26) in der Endposition eine kontinuierliche Oberfläche bilden und/oder die Elektroden oder Elektrodenteile gegenseitig, insbesondere eine mittlere Elektrode oder ein mittleres Elektrodenteil gegenüber außen liegenden Elektroden oder Elektrodenteilen, isoliert sind und/oder mit unterschiedlicher Spannung beaufschlagbar sind.

## Claims

1. A method for the electrochemical machining of blades (1) of a turbomachine, the blade comprising a gas channel region and shrouds at the blade root and/or at the blade tip, which shrouds are inclined on one side or on both sides such that undercuts are formed in the gas channel region,
multiple electrodes (55 - 60), which are arranged in a star-like manner, being used in order to be moved from an initial position that is at a first distance from a surface to be machined into a final position that is at a second distance from an end contour of the surface to be machined so that, in the final position, a closed working surface of the electrodes having a negative shape is situated opposite the end contour of the surface to be machined,
**characterized in that**
- each electrode (55 - 60) is made up of several parts and comprises at least three electrode parts (10, 11, 12, 14, 15, 16), and
- the electrode parts are arranged in a row perpendicularly to the plane in which the multi-part electrodes (55 - 60) are arranged in a star-like manner.

2. The method according to claim 1,
**characterized in that**
all of the electrode parts (10, 11, 12, 14, 15, 16) arrive at the final position simultaneously.

3. The method according to either claim 1 or claim 2,
**characterized in that**
each outer electrode part (10, 12; 14, 16) is moved at an angle of from 30° to 60° with respect to a main direction of movement of the electrode, which is towards the shrouds, whereas one or more middle electrodes close the gap that becomes free in the region of the airfoil.

4. The method according to any of the preceding claims,
**characterized in that**
three, four, six or more multi-part electrodes (55 - 60) are used, which are moved in their main direction of movement towards the airfoil in a star-like manner.

5. The method according to any of the preceding claims,
**characterized in that**
each of the electrode parts (10, 11, 12, 14, 15, 16) comprises a working surface contour, which is complementary to part of the surface to be machined, and/or that a U-shaped or trapezoidal cross-sectional profile of the surface to be machined is formed by a shroud, by the airfoil, and by a part that is in the region of the blade root, and **in that** in particular at least part of the shroud (4) is oriented with respect to the airfoil (3) so that an undercut is formed on the airfoil with respect to a direction that is parallel to the surface normal.

6. The method according to any of the preceding claims,
**characterized in that**
the directions of movement of the electrodes are designed so that at least one middle electrode part (11, 15) of the at least three electrode parts (10, 11, 12, 14, 15, 16), which is located between two outer electrode parts (10, 12, 14, 16), moves linearly towards the airfoil, whereas the two outer electrode parts move away from the middle electrode part at an angle of from 30° to 60° with respect to the direction of movement of the middle electrode part.

7. The method according to any of the preceding claims,
**characterized in that**
the trailing electrode parts or electrodes are electrically insulated from the leading electrode parts of the multi-part electrode or electrodes and are supplied with a higher voltage.

8. The method according to any of the preceding claims,
**characterized in that**,
in the final position, all the electrode parts or electrodes are substantially at an equal distance from an end contour of the surface to be machined.

9. The method according to any of the preceding claims,
**characterized in that**
the electrodes or electrode parts, in particular a middle electrode or a middle electrode part (11, 15), are insulated from outer electrodes or electrode parts (10, 12, 14, 16) and/or are supplied with a different voltage.

10. The method according to claim 9,
**characterized in that**
the at least one middle electrode or middle electrode part (11, 15) is supplied with a voltage such that the effective electrochemical distance corresponds to the distance from the outer electrodes or electrode parts (10, 12, 14, 16) to the surface to be machined.

11. An electrode array for carrying out electrochemical machining according to any of the preceding claims, the electrode array comprising a plurality of electrodes (55 - 60), which are arranged in a star-like manner and are movable relative to one another in various directions and in relation to a stationary bearing, the electrodes and/or the electrode parts being movable from an initial position into a final position so that, in the final position, the working surfaces of the electrodes (55 - 60) form a continuous surface,
**characterized in that**
- each electrode (55 - 60) is made up of several parts and comprises at least three electrode parts, and
- the electrode parts are arranged in a row perpendicularly to the plane in which the multi-part electrodes (55 - 60) are arranged in a star-like manner.

12. The electrode array according to claim 11,
**characterized in that**
the electrodes can move linearly and/or at a constant speed.

13. The electrode array according to either claim 11 or claim 12,
**characterized in that**
three, four, six or more multi-part electrodes are arranged in a star-like manner.

14. The electrode array according to any of claims 11 to 13,
**characterized in that**,
with regard to their working surfaces, an outer electrode part of the multi-part electrode is arranged in front of the at least one middle electrode or middle electrode part (11, 15) in the direction of movement, and the middle electrode part trails behind and/or the electrode parts are coupled, at least in part.

15. The electrode array according to any of claims 11 to 14,
**characterized in that**,
in the final position, the working surfaces (20, 21, 22, 24, 25, 26) of the electrodes or electrode parts form a continuous surface and/or the electrodes or electrode parts are insulated from one another, in particular a middle electrode or a middle electrode part is insulated from outer electrodes or electrode parts, and/or can be supplied with a different voltage.

## Revendications

1. Procédé de traitement électrochimique d'aubes (1) d'une turbomachine, l'aube comportant une zone de conduit de gaz et, au niveau du pied de l'aube et/ou de la pointe de l'aube, des bandes de recouvrement qui sont inclinées d'un côté ou des deux côtés de telle sorte que des contre-dépouilles sont présentes dans la zone de conduit de gaz,
une pluralité d'électrodes (55 - 60) disposées en étoile étant utilisées pour être déplacées d'une position initiale située à une première distance de la surface à traiter jusque dans une position finale située à une seconde distance d'un contour d'extrémité de la surface à traiter de telle sorte que, dans la position finale, une surface de travail fermée des électrodes soit opposée à une forme négative du contour d'extrémité de la surface à traiter,
**caractérisé en ce que**
- chaque électrode (55 à 60) est en plusieurs parties et comporte au moins trois parties d'électrode (10, 11, 12, 14, 15, 16) et
- les parties d'électrode sont alignées perpendiculairement au plan dans lequel les électrodes en plusieurs parties (55 à 60) sont disposées en étoile.

2. Procédé selon la revendication 1,
**caractérisé en ce que**
toutes les parties d'électrode (10, 11, 12, 14, 15, 16) arrivent simultanément dans la position finale.

3. Procédé selon la revendication 1 ou 2,
**caractérisé en ce que**
toutes les parties d'électrode extérieures (10, 12 ; 14, 16) sont déplacées en direction des bandes de recouvrement dans un angle de 30° à 60° par rapport à une direction de déplacement principale de l'électrode, tandis qu'une ou plusieurs électrodes médianes ferment l'espace devenu libre dans la zone de l'ailette.

4. Procédé selon l'une des revendications précédentes,
**caractérisé en ce que**
trois, quatre ou six électrodes en plusieurs parties (55 à 60) ou plus sont utilisées qui sont déplacées en étoile vers l'ailette dans leur direction de déplacement principale.

5. Procédé selon l'une des revendications précédentes,
**caractérisé en ce que**
les parties d'électrode (10, 11, 12, 14, 15, 16) présentent chacune un contour de surface de travail qui est complémentaire d'une partie de la surface à traiter et/ou **en ce que** un profil trapézoïdal ou en U en coupe transversale de la surface à traiter est formé par une bande de recouvrement, l'ailette et une partie de la zone du pied de l'aube, et **en ce que** notamment au moins une partie de bande de recouvrement (4) est orientée par rapport à l'ailette (3) de façon à former une contre-dépouille par rapport à une direction parallèle à la normale de surface à l'ailette.

6. Procédé selon l'une des revendications précédentes,
**caractérisé en ce que**
les directions de déplacement des électrodes sont disposées de telle sorte qu'au moins une partie d'électrode médiane (11, 15) des au moins trois parties d'électrode (10, 11, 12, 14, 15, 16), laquelle est située entre deux parties d'électrode extérieures (10,12,14, 16), est déplacée linéairement vers l'ailette, tandis que les deux parties d'électrode extérieures s'écartent de la partie d'électrode médiane avec un angle de 30° à 60° par rapport à la direction de déplacement de la partie d'électrode médiane.

7. Procédé selon l'une des revendications précédentes,
**caractérisé en ce que**
les parties d'électrodes, ou les électrodes, situées en arrière sont isolées électriquement par rapport aux parties d'électrode de l'électrode en plusieurs parties, ou aux électrodes, situées en avant et sont alimentées avec une tension plus élevée.

8. Procédé selon l'une des revendications précédentes,
**caractérisé en ce que**
toutes les parties d'électrode ou électrodes situées dans la position finale sont sensiblement à la même distance d'un contour d'extrémité de la surface à traiter.

9. Procédé selon l'une des revendications précédentes,
**caractérisé en ce que**
les électrodes ou parties d'électrode, notamment une électrode médiane ou une partie d'électrode médiane (11, 15) sont isolées par rapport aux électrodes ou parties d'électrode (10, 12, 14, 16) situées à l'extérieur et/ou sont soumises à une tension différente.

10. Procédé selon la revendication 9,
**caractérisé en ce que**
l'au moins une électrode médiane ou une partie d'électrode médiane (11, 15) est soumise à une tension de sorte que la distance électrochimique efficace correspond à la distance entre les électrodes ou parties d'électrode (10, 12, 14, 16) extérieures de la surface à traiter.

11. Ensemble d'électrodes destiné à effectuer un traitement électrochimique selon l'une des revendications précédentes, l'ensemble d'électrodes comprenant une pluralité d'électrodes (55 à 60) disposées en étoile qui peuvent être déplacées dans des différentes directions les unes par rapport aux autres et par rapport à un support immobile, les électrodes et/ou parties d'électrode pouvant être déplacées d'une position initiale jusque dans une position finale de sorte que les électrodes (55 à 60) forment, avec leurs surfaces de travail dans la position finale, une surface continue,
**caractérisé en ce que**
- chaque électrode (55 à 60) est en plusieurs parties et comporte au moins trois parties d'électrode et
- les parties d'électrode sont alignées perpendiculairement au plan dans lequel les électrodes en plusieurs parties (55 à 60) sont disposées en étoile.

12. Ensemble d'électrodes selon la revendication 11,
**caractérisé en ce que**
les électrodes peuvent être déplacées linéairement et/ou à une vitesse uniforme.

13. Ensemble d'électrodes selon la revendication 11 ou 12,
**caractérisé en ce que**
trois, quatre ou six électrodes ou plus en plusieurs parties sont disposées en étoile.

14. Ensemble d'électrodes selon l'une des revendications 11 à 13,
**caractérisé en ce que**
depuis l'électrode en plusieurs parties, une partie d'électrode disposée à l'extérieur est disposée, dans la direction de déplacement par rapport à sa surface de travail, avant l'au moins une électrode médiane ou une partie d'électrode médiane (11, 15), et la partie d'électrode médiane est située en arrière et/ou les parties d'électrode sont au moins partiellement accouplées.

15. Ensemble d'électrodes selon l'une des revendications 11 à 14,
**caractérisé en ce que**
les électrodes ou parties d'électrodes forment une surface continue avec leurs surfaces de travail (20, 21, 22, 24, 25, 26) en position finale et/ou les électrodes ou parties d'électrode sont isolées les unes des autres, notamment une électrode médiane ou une partie d'électrode médiane est isolée par rapport à des électrodes ou parties d'électrodes situées à l'extérieur, et/ou peuvent être soumises à des tensions différentes.
